**Europäisches Patentamt**

**European Patent Office**

**Office européen des brevets**

(19)

(11) Veröffentlichungsnummer: **0 017 950**
**B1**

(12) # EUROPÄISCHE PATENTSCHRIFT

(45) Veröffentlichungstag der Patentschrift:
31.08.83

(51) Int. Cl.³: **G 06 K 7/14**, G 06 K 9/18,
G 06 K 7/10

(21) Anmeldenummer: **80101991.0**

(22) Anmeldetag: **14.04.80**

(54) **Verfahren und Vorrichtung zum Identifizieren von Gegenständen.**

(30) Priorität: **19.04.79 DE 2915732**

(43) Veröffentlichungstag der Anmeldung:
**29.10.80 Patentblatt 80/22**

(45) Bekanntmachung des Hinweises auf die Patenterteilung:
**31.08.83 Patentblatt 83/35**

(84) Benannte Vertragsstaaten:
**AT BE CH FR GB IT LI LU NL SE**

(56) Entgegenhaltungen:
**DE-A-2 457 259**
**US-A-3 784 792**
**US-A-3 854 036**
**US-A-3 887 792**
**US-A-3 925 761**

**ELEKTRONIK, Band 22, Heft 11, November 1973, Seiten 395–398 München, DE.**
**K.R. KIMMEL et al.: «Rationelle Multiplikation und Division mit Festwertspeichern»**

(73) Patentinhaber: **Scantron GmbH & Co. Elektronische Lesegeräte KG, Legienstrasse 14, D-6230 Frankfurt/Hoechst (DE)**

(72) Erfinder: **Wevelsiep, Klaus, Dr., Fuchstanzstrasse 11, D-6239 Kriftel (DE)**

(74) Vertreter: **Eisenführ & Speiser, Martinistrasse 24, D-2800 Bremen 1 (DE)**

Verfahren und Vorrichtung zum Identifizieren von Gegenständen.

Die Erfindung betrifft ein Verfahren und eine Vorrichtung zum Identifizieren von Gegenständen, die in beliebiger Position und Orientierung und zu beliebigen Zeiten auf einem Bildfenster erscheinen und auf einer dem Bildfenster zugewandten Oberfläche jeweils ein Kennzeichnungsfeld aufweisen, welches in mindestens einer Datenspur Zeichen und mindestens ein Kontrastlinienmuster umfasst, welches die Position und die Orientierung der Datenspur kennzeichnet und mehrere parallele Linien mit unterschiedlichem Abstand und/oder Linienbreiten besitzt, wobei das Bildfenster zeilenweise abgetastet und ein dem abgetasteten Kontrastlinienmuster und den nachfolgenden Zeichen entsprechendes binäres Videosignal erzeugt wird, wobei das Bildfenster im ersten Verfahrensschritt unter verschiedenen Winkeln so lange abgetastet wird, bis ein vorgegebenes Kontrastlinienmuster erkannt wird, im zweiten Verfahrensschritt die Position und Ausrichtung der Datenspur relativ zum Bildfenster bestimmt wird und im dritten Verfahrensschritt eine Rasterabtastung in Richtung der Datenspur erfolgt und die Zeichen abgelesen und dekodiert werden.

Derartige Verfahren und Vorrichtungen sind bereits aus der DE-A-2 338 561 bekannt. Bei den zu identifizierenden Gegenständen handelt es sich beispielsweise um Handelsware, Warenhausartikel od.dlg., die in maschinell lesbarer Form gekennzeichnet sind. Zu diesem Zweck werden Kennzeichnungsfelder auf den Objekten befestigt oder angebracht, welche mit Zeichen eines maschinell lesbaren Codes, z.B. des OCR-Codes, bedruckt sind. Ein derartiges Kennzeichnungsfeld kann aus Qualitäts-, Dimensions-, Preisangaben, aus der Artikelnummer usw. bestehen. Diese Identifizierungsdaten sind in irgendeiner Weise auf den Oberflächen der Gegenstände angebracht.

Derartige Kennzeichnungsfelder lassen sich nur schwer maschinell lesen, da sich die Gegenstände in ihrer Grösse unterscheiden, und da diese Kennzeichnungen z.B. auf Klebeetiketten an verschiedenen Stellen des Gegenstandes aufgebracht werden. Beim Lesen der Kennzeichnungsfelder kann daher nicht davon ausgegangen werden, dass diese in einer bestimmten Position mit festgelegter Orientierung zu bestimmten Zeiten zur Verfügung steht. Das Lesen dieser Kennzeichnungsfelder ist daher nicht vergleichbar mit dem Lesen von Lochkarten od.dgl., bei dem eine Karte in einer genau definierten Leseposition zu genau festgelegten Zeiten zur Verfügung steht. Im vorliegenden Fall trifft genau das Entgegengesetzte zu. Das Kennzeichnungsfeld auf dem Gegenstand erscheint nur mehr oder weniger näherungsweise an einem bestimmten Ort, und auch die Ausrichtung ist relativ willkürlich.

Derartige Verfahren und Vorrichtungen zum Identifizieren von Gegenständen werden z.B. an den Kassenplätzen von Supermärkten usw. eingesetzt, um ein automatisches Erfassen des Preises und/oder der Artikelnummer derjenigen Gegenstände zu ermöglichen, welche ein Kunde kaufen will und zu diesem Zweck an den Kassenplatz gebracht hat. Die Warenartikel, wie Schachteln unterschiedlicher Form und Grösse, Flaschen, Kartons, Dosen usw. werden dann einzeln auf dem Bildfenster angeordnet, wobei lediglich diejenige Oberfläche, welche das zur Warenkennzeichnung verwendete Kennzeichnungsfeld trägt, gegen das Bildfenster gerichtet sein muss. Das Kennzeichnungsfeld auf den unterschiedlichen Gegenständen erscheint somit unterschiedlich ausgerichtet an unterschiedlichen Stellen innerhalb des Bildfensters. Ferner erscheint das Kennzeichnungsfeld nicht in festen Zeitabständen an der Ablesestation. Die Ablesestation muss daher nach dem Kennzeichnungsfeld suchen und anschliessend in Richtung der Datenspuren des Kennzeichnungsfeldes die Zeichen der Datenspuren auslesen. Die ausgelesenen Zeichen lassen sich dann als elektrische Signale der Kasse zuleiten, welche den Preis und eventuell auch die Artikelnummer bzw. die Artikelgruppe auf dem Kassenbon ausdrucken kann.

Das auf dem Gegenstand aufgebrachte Kennzeichnungsfeld ist mit einem Kontrastlinienmuster (PIC) versehen, welches mehrere parallele Linien mit unterschiedlichem Abstand und/oder unterschiedlicher Linienbreite besitzt. Das Kontrastlinienmuster dient dazu, das Datenfeld, z.B. das bedruckte Etikett, zuverlässig und eindeutig gegenüber sonstigen Zeichen und Linienmustern abzuheben, die möglicherweise auf der Oberfläche des Gegenstands in der Umgebung des Datenfeldes vorhanden sind. Ausserdem besitzt das Kontrastlinienmuster bezüglich den Datenspuren innerhalb des Kennzeichnungsfeldes eine vorgegebene Position und Orientierung und kann daher verwendet werden, um die Position und Orientierung des Kontrastlinienmusters – und damit der Datenspuren – relativ zum Abtastwinkel der Abtastzeile zu ermitteln, um anschliessend ein Abtastraster in Richtung der Datenspuren zu erzeugen, welches die Zeichen innerhalb der Datenspuren in senkrechter Richtung überstreicht. Die sichere Erkennung des Kontrastlinienmusters stellt somit einen wesentlichen Schritt beim omnidirektionalen Lesen derartiger Kennzeichnungsfelder dar, die mit Klarschriftzeichen bedruckt sind.

Bei dem Verfahren bzw. der Vorrichtung gemäss der DE-A-2 338 561 ist die Erkennung des Kontrastlinienmusters erst dann erfolgt, wenn das Kontrastlinienmuster im wesentlichen senkrecht zur Richtung seiner Linien abgetastet wird und die dadurch im Videosignal enthaltene Impulsfolge gleich einer vorgegebenen Impulsfolge ist, die dem verwendeten Kontrastlinienmuster entspricht. Es handelt sich somit um ein Korrelationsverfahren. Nachteilig ist hierbei insbesondere, dass die Abtastung des Bildfeldes zum Aufsuchen des Kontrastlinienmusters in sehr kleinen Winkelschritten erfolgen muss, bis eine Abtastzeile das Kontrastlinienmuster senkrecht schneidet, wodurch die Suchzeit unerwünscht gross ist. Darüber hinaus machen sich unscharf gedruckte Ränder der Linien des Kontrastlinienmusters störend bemerkbar und verhindern unter Umständen, dass ein abgetastetes Kontrastlinienmuster als solches erkannt wird, da die im Videosignal enthaltene Impulsfolge von dem abgespeicherten Vergleichsmuster abweicht. Als Folge hiervon wiederholt sich entweder der Suchvorgang oder das Kontrastlinienmuster lässt sich überhaupt nicht erkennen, das zugehörige Datenfeld bleibt dann ungelesen.

Aus der DE-A-2 457 259 ist ein Verfahren bekannt, bei dem die Intervallänge sich überlappender Hell-Dunkel-Intervalle gemessen wird und anschliessend aufeinanderfolgend gemessene Intervallängen miteinander verglichen werden, und digitale Vergleichssignale erzeugt werden, wenn die beiden jeweils miteinander verglichenen Intervallängen zueinander in vorgegebenen Verhältnissen stehen, die den ensprechenden Abständen in gedruckten Balkenkode entsprechen. Anschliessend wird ein Erkennungssignal für ein bestimmtes Zeichen abgegeben, wenn bei einer durch den Balkenkode vorgegebenen Anzahl von aufeinanderfolgenden Vergleichsschritten eine festgelegte Folge digitaler Signale erzeugt wird.

Aus der US-A-3 925 761 ist ein Verfahren zur Zeichenerkennung bekannt, bei dem aus den Eingangsdaten ein Sektor (x, y) gebildet wird, dessen Komponenten einen zweidimensionalen Matrixspeicher adressieren, der für vorgegebene Adressen ein vorgegebenes Signal speichert.

Aufgabe der Erfindung ist es demgegenüber, ein Verfahren und eine Vorrichtung der eingangs genannten Art anzugeben, das bzw. die ein rasches und sicheres Erkennen von Kontrastlinienmustern ermöglicht und von Unschärfen an den Rändern der Kontrastlinien weitgehend unbeeinflusst arbeitet.

Diese Aufgabe wird bei einem Verfahren der eingangs genannten Art erfindungsgemäss durch die kennzeichnenden Merkmale des Anspruches 1 gelöst.

Eine Vorrichtung zum Durchführen des Verfahrens besitzt eine optoelektronische Abtasteinrichtung mit drehbarem Abtastraster, die am Ausgang das binäre Videosignal abgibt, das dem zeilenweise abgetasteten Bildfenster entspricht und das Kontrastmuster der abgetasteten Zeile binär enthält, mit Dekodiereinrichtungen zum Erkennen des abgetasteten Kontrastlinienmusters (PIC), das die Position und die Orientierung mindestens einer Datenspur des Kennzeichnungsfeldes kennzeichnet und mehrere parallele Linien mit unterschiedlichem Abstand und/oder Linienbreite enthält. Die Vorrichtung enthält ferner Einrichtungen zum Ausrichten des Abtastrasters parallel zur Datenspur und zum Lesen der abgetasteten Zeichen der Datenspur. Die Vorrichtung ist erfindungsgemäss dadurch gekennzeichnet, dass die Dekodiereinrichtungen eine Zählschaltung enthalten, die das Videosignal empfängt und die Intervallängen aufeinanderfolgend sich überlappender Intervalle des Videosignals bestimmt, dass die Dekodiereinrichtungen mindestens eine Speichermatrix enthält, die über eine Torschaltung den aufeinanderfolgenden Intervallängen entsprechende Zählerstände paarweise empfängt und jeweils ein Treffersignal abgibt, wenn das Verhältnis der beiden aufeinanderfolgenden Intervallängen in einem vorgegebenen Wertebereich liegt, das dem Verhältnis der entsprechenden Intervalle des Kontrastlinienmusters entspricht, und dass eine Auswerteschaltung vorgesehen ist, die bei Aufeinanderfolge einer vorgegebenen Anzahl von Treffersignaler ein Erkennungssignal abgibt.

Die Vorteile der Erfindung liegen insbesondere darin, dass die Erkennung des Kontrastlinienmusters nur davon abhängt, ob das Verhältnis aufeinanderfolgender, sich überlappender Intervallängen des Videosignals innerhalb enger Wertebereiche liegt, so dass das Kontrastlinienmuster auch bei einer schräg zur Richtung der Kontrastlinien erfolgenden Abtastung sicher erkannt wird, da die aufeinanderfolgend gebildeten Verhältnisse aufeinanderfolgend gemessener Intervallängen des Videosignals gegenüber dem Abtastwinkel invariant sind. Zur sicheren Erkennung des Kontrastlinienmusters reicht somit eine – unter beliebigem Winkel erfolgende – Abtastung des Kontrastlinienmusters aus, bei der alle Kontrastlinien vollständig überquert werden. Das Aufsuchen des Kontrastlinienmusters kann daher mit relativ grossen Winkelschritten, d.h. relativ rasch erfolgen.

Da die Dekodierung des Videosignals zum Auffinden des Kontrastlinienmusters bezüglich des Videosignals in Realzeit-Verarbeitung, d.h. im wesentlichen gleichzeitig mit der Gewinnung des Videosignals erfolgen muss, um sicherzustellen, dass ein Kontrastlinienmuster an beliebiger Stelle innerhalb des Videosignals erkannt wird, erfolgt die Feststellung, ob das Verhältnis aufeinanderfolgend gemessener Intervallängen innerhalb eines vorgegebenen Wertebereichs liegt, nicht durch eine Division, sondern durch Eingang in eine zweidimensionale Tabelle, die nur dann ein vorgegebenes Treffersignal abgibt, wenn beide jeweils miteinander verglichenen Intervallängen in einem vorgegebenen Erwartungsfeld der Tabelle liegen, innerhalb dessen der Quotient der miteinander verglichenen Intervallängen einen Wertebereich besitzt, der demjenigen der entsprechenden Intervallängen des gesuchten Kontrastlinienmusters entspricht. Dadurch wird das zeit- und hardware-aufwendige Divisionsverfahren vermieden und in einfacher Weise der Realzeit-Betrieb bezüglich des Videosignals aufrechterhalten.

Die Tabelle ist bevorzugt in einem zweidimensionalen Festwertspeicher (PROM) gespeichert. Die verschiedenen möglichen diskreten Werte der ersten gemessenen Intervallänge adressieren verschiedene Zeilen des Festwertspeichers. Die verschiedenen diskreten Werte der nachfolgend gemessenen Intervallänge adressiert verschiedene Spalten des Festwertspeichers. Das Erwartungsfeld wird so vorgegeben, dass es alle diejenigen Speicherplätze umfasst, bei denen der Quotient aus der der Zeilenadresse zugeordneten Intervallänge und der der Spaltenadresse zugeordneten Intervallänge in einem vorgegebenen Wertebereich liegt. Wird ein Speicherplatz innerhalb des Erwartungsfeldes adressiert, so gibt der Festwertspeicher ein Treffersignal ab, das eine Teilerkennung des Kontrastlinienmusters signalisiert. Liegt dagegen der durch Zeilenadresse und Spaltenadresse festgelegte Speicherplatz ausserhalb des Erwartungsfeldes, so wird ein Signal abgegeben, das angibt, dass der Quotient der verglichenen aufeinanderfolgenden Intervallängen ausserhalb des vorgegebenen Wertebereiches liegt. Bei Auftreten dieses Signals werden die Dekodiereinrichtungen zurückgesetzt und sind dann zur Ausführung eines neuen Erkennungs- und Dekodierschritts bereit.

Bevorzugt werden jeweils zwei miteinander zu vergleichende Intervallängen in einer eigenen Tabelle mit eigenem Erwartungsfeld eingegeben und dort bezüglich ihres Quotienten-Werts überprüft. Jede einzelne Tabelle wird bevorzugt in einem separaten Festwertspeicher PROM gespeichert, um die Steuerlogik der Dekodiereinrichtungen zu vereinfachen.

Gemäss einer bevorzugten Ausführungsform der Erfindung besitzen der erste Festwertspeicher zum Vergleich der ersten und zweiten Intervallänge sowie der zweite Festwertspeicher zum Vergleichen der zweiten und dritten Intervallänge usw. 8 Bit-Speicherplätze. Es lassen sich daher in den Festwertspeichern 8 Tabellen mit jeweils eigenem Erwartungsfeld unterbringen, wobei die erste Tabelle z.B. aus dem ersten Bit der Speicherplätze, die zweite Tabelle aus dem zweiten Bit der Speicherplätze usw. gebildet wird. Durch selektive Adressieurng und selektives Auslesen der jeweils benutzten Tabelle lassen sich wahlweise bis zu 8 verschiedene Kontrastlinienmuster mit einer Dekodierschaltung erkennen, wodurch die Einsetzbarkeit der erfindungsgemässen Vorrichtung erhöht ist.

Das binäre Videosignal besitzt z.B., wenn der Abtaststrahl über einen dunkel eingefärbten Bereich des Datenfeldes eine erste Amplitude, Hi, und es besitzt eine zweite Amplitude, Lo, wenn der Abtaststrahl über einen hellen, zeichenfreien Bereich des Datenfeldes läuft. Die Zuordnung der Amplituden Hi sowie Lo ist willkürlich, es ist auch die andere Zuordnung der beiden Amplituden zu hellen und dunklen Bereichen des Datenfeldes möglich.

Die Intervalle des Videosignals, deren Länge ermittelt wird, erstrecken sich bevorzugt jeweils von einer Anstiegsflanke bis zur nächsten Anstiegsflanke sowie überlappend von der zwischen diesen Anstiegsflanken liegenden Abfallflanke bis zur nächsten Abfallflanke des Videosignals. Das dritte Intervall erstreckt sich dann von der zweiten Anstiegsflanke bis zu einer nächsten Anstiegsflanke usw. Dadurch, dass sich die Intervalle jeweils von Anstiegsflanke zu Anstiegsflanke bzw.

von Abfallflanke zu Abfallflanke erstrecken, ist sichergestellt, dass unscharfe Ränder der Kontrastlinien des Kontrastlinienmusters – die im allgemeinen bei allen Kontrastlinien gleichsinnig und gleichartig verlaufen – die Intervallängen im wesentlichen nicht beeinflussen, so dass die erfindungsgemässe Dekodiervorrichtung auch Kontrastlinienmuster erkennt, die bei verschiedenen Druckbedingungen erzeugt wurden.

Zur Erhöhung der Erkennungssicherheit lassen sich Kontrastlinienmuster mit einer zeichenfreien Vorlaufzone vorgegebener Länge verwenden, wobei die Vorlaufzone vor der ersten Kontrastlinie angeordnet ist. Die Messung der Intervallängen setzt dann bevorzugt erst ein, wenn eine zeichenfreie Vorlaufzone der vorgegebenen Länge im Videosignal erscheint.

Bevorzugt wird die Messung der Intervallängen beendet, wenn eine beliebige Intervallänge einen vorgegebenen Maximalwert überschreitet, der gleich der im Kontrastlinienmuster auftretenden maximalen Intervallänge ist. Bevorzugt wird eine laufende Messung der Intervallängen ebenfalls beendet, wenn das Verhältnis zweier aufeinanderfolgend gemessener Intervallängen ausserhalb des vorgegebenen Wertebereichs liegt. In beiden Fällen wird die Auswertung zum frühestmöglichen Zeitpunkt unterbrochen und die Dekodiervorrichtung wieder in ihren aktiven Zustand zurückgesetzt.

Bevorzugt wird die laufende Messung der Intervallängen ebenfalls beendet, wenn eine zeichenfreie Zwischenzone vorgegebener Dauer abgetastet wird, die gleich der maximalen Abtaststrecke zwischen den Linien des Kontrastlinienmusters entspricht. Die Dekodiervorrichtung wird dann in den aktiven Zustand zurückgesetzt und steht dann zur Durchführung einer neuen Auswertung bereit.

Das Kontrastlinienmuster besitzt bevorzugt ferner eine zeichenfreie Nachlaufzone, deren Länge z.B. der Länge der zeichenfreien Vorlaufzone entspricht. Ein Kontrastlinienmuster-Erkennungssignal wird dann bevorzugt nur abgegeben, wenn das Videosignal ebenfalls eine zeichenfreie Nachlaufzone der vorgegebenen Länge enthält.

Um die Redundanz des Erkennungsvorganges zu erhöhen und damit die Fehlerwahrscheinlichkeit zu verringern, wird bevorzugt dieselb Zeile n-mal abgetastet, und ein Kontrastlinienmuster-Erkennungssignal wird erst dann abgegeben, wenn n-mal hintereinander ein Kontrastlinienmuster erkannt wird.

Die Längen der sich überlappenden Intervalle des Videosignals werden bevorzugt digital gemessen und zu diesem Zweck in der Zählschaltung ausgezählt. Die Zählschaltung besitzt einen Zeitsteuerkreis, der Torimpulse erzeugt, die dieselbe Länge wie die entsprechenden Intervalle des Videosignals besitzen. Zur Messung der Länge jeweils eines Intervalls des Videosignals ist je ein Zähler vorgesehen, dem die Torimpulse des betreffenden Intervalls an einem Toreingang zugeführt werden. Die Zähleingänge der Zähler sind gemeinsam mit einem Taktgenerator verbunden, der während der anliegenden Torimpulse Taktimpulse an die Zähler abgibt. Der Endstand der einzelnen Zähler entspricht dann jeweils der zeitlichen Länge der betreffenden Torimpulse und somit der entsprechenden Intervalle. Aufeinanderfolgend gezählte Intervall-Zählwerte adressieren den entsprechenden Festwertspeicher, nachdem der spätere Intervall-Zählwert gezählt ist, wobei die Zählung weiterer Intervall-Zählwerte noch andauern kann.

Im folgenden werden Ausführungsbeispiele der Erfindung anhand der Zeichnung näher erläutert. Es zeigen:

Fig. 1 eine erste Anordnung eines Kontrastlinienmusters innerhalb eines Datenfelds mit einer Datenspur;

Fig. 2 eine zweite Anordnung eines Kontrastlinienmusters innerhalb eines Datenfelds;

Fig. 3 eine dritte Anordnung eines Kontrastlinienmusters innerhalb eines Datenfelds;

Fig. 4 eine hell-dunkel-Verteilung verschiedener Kontrastlinienmuster senkrecht zu den Kontrastlinien;

Fig. 5 ein Abschnitt des Videosignals als Funktion der Zeit, der dem Kontrastlinienmuster der Fig. 4a entspricht;

Fig. 6 ein Blockschaltbild der Zählschaltung der Dekodiereinrichtungen;

Fig. 7 ein Blockschaltbild der Tabelle der Dekodiereinrichtung;

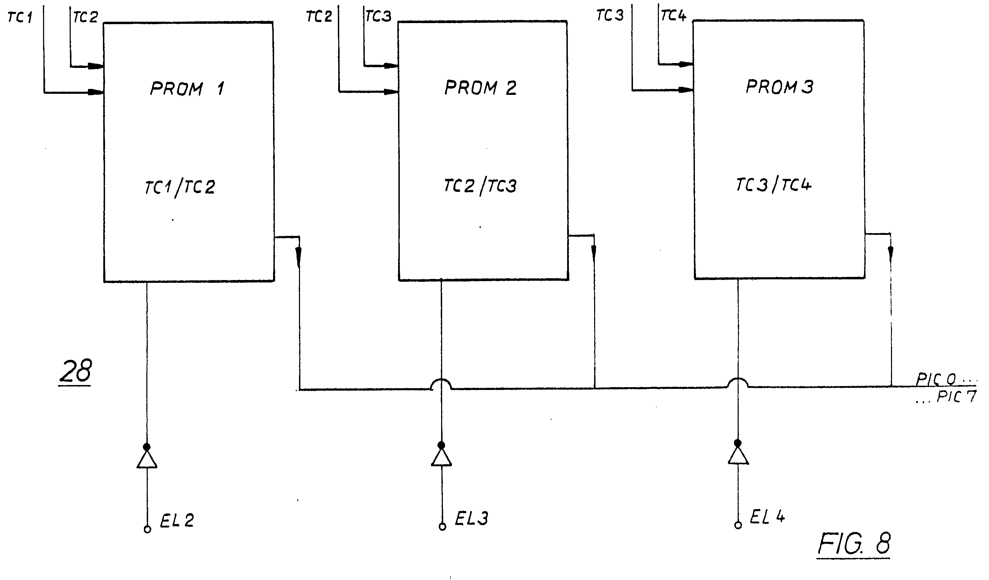

Fig. 8 eine weitere Ausführung der Tabelle der Dekodiereinrichtung;

Fig. 9 eine Blockschaltbild der Auswerteschaltung der Dekodiereinrichtung;

Fig. 10 eine schematische Darstellung des Aufbaus der Vergleichstabelle;

Fig. 11 einen Impulsplan für die im Zeitsteuerkreis der Zählschaltung erzeugten Impulse und

Fig. 12 einen Impulsplan für die innerhalb der Auswahlschaltung verarbeiteten Impulse.

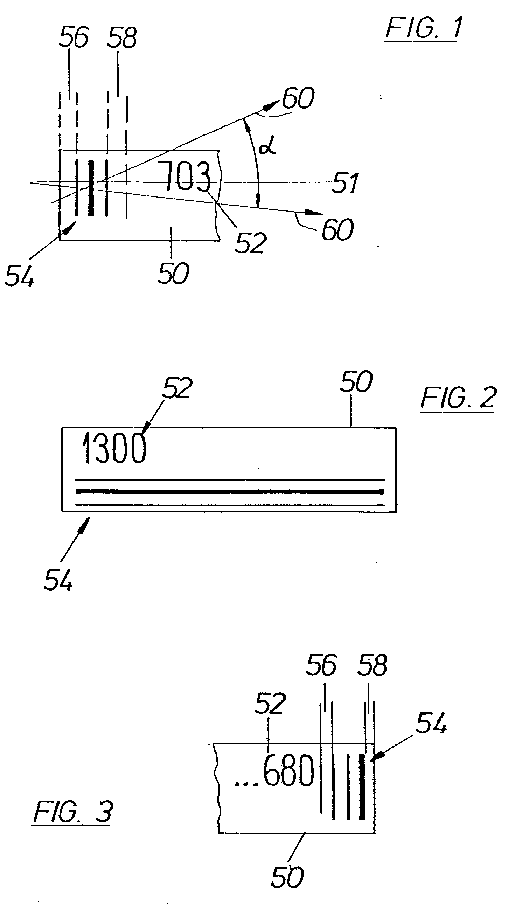

In den Fig. 1 bis 3 sind verschiedene Kennzeichnungsfelder 50, z.B. aufklebbare Preisetiketten, dargestellt, die z.B. auf einem Behälter, einer Packung oder irgendeinem Warenartikel befestigt sind und in willkürlicher Positon und Ausrichtung auf einem Boldfenster erscheinen. Das Bildfenster wird z.B. durch die optische Apertur einer Lichtpunkt-Abtasteinrichtung, z.B. eines Vidikons bestimmt, durch die das Bildfenster zuerst zeilenweise, anschliessend in einem zeilenförmigen Abtastraster abgetastet wird.

Die Kennzeichnungsfelder 50 besitzen jeweils ein Datenfeld, das in mindestens einer Datenspur 51 kontrastierende Zeichen 52 zur Identifizierung der mit dieser Kennzeichnung versehenen Ware enthält. Die kontrastierenden Zeichen bestehen bevorzugt aus Klarschriftzeichen in einer der bekannten maschinell lesbaren Schrifttypen, z.B. in der OCR-A-Schrift bzw. der OCR-B-Schrift. In vorgegebener Position und Orientierung zur Datenspur ist ein Kontrastlinienmuster 54 angeordnet – auch Positionsidentifizierungscode PIC genannt – das mehrere parallele Kontrastlinien mit unterschiedlichem Abstand und/oder Linienbreiten besitzt. Das Kontrastlinienmuster ist gemäss Fig. 1 vor der Datenspur, gemäss Fig. 2, unter der Datenspur, gemäss Fig. 3 am Ende der Datenspur angebracht. Das Kontrastlinienmuster 54 ist senkrecht zu den Kontrastlinien asymmetrisch ausgebildet, um das Kennzeichnungsfeld hinsichtlich Beginn und Ende der Datenspuren zu kennzeichnen. Die in den Fig. 1 und 2 dargestellten Kontrastlinienmuster, nachfolgend als PIC-Muster bezeichnet, besitzen eine zeichenfreie Vorlaufzone 56 und eine zeichenfreie Nachlaufzone 58.

Obwohl nur PIC-Muster mit jeweils drei Linien dargestellt sind, lassen sich auch PIC-Muster mit mehr als drei Linien verwenden. Ferner lassen sich die PIC-Muster – abweichend von den Fig. 1 bis 3 – auch in anderer Position und anderer Orientierung bezüglich der Datenspuren anbringen, es lassen sich ferner auch zwei oder mehrere PIC-Muster auf einem Kennzeichnungsfeld 50 aufbringen.

Wie in Fig. 1 dargestellt ist, wird das Bildfenster, bzw. ein dem Bildfenster entsprechendes Abbild, z.B. auf dem Target eines Vidikons, schrittweise mit einem Schrittwinkel $\alpha$ von jeweils mindestens einer Abtastzeile 60 abgetastet. Es ist wesentlich, dass vor dem Lesen der Datenspuren zuerst das PIC-Muster sicher erkannt und seine Position und Orientierung relativ zum Abtaststrahl 60 bestimmt wird, da dann durch eine anschliessende Rasterabtastung in Richtung der Datenspur die in der Datenspur enthaltenen Zeichen gelesen werden können.

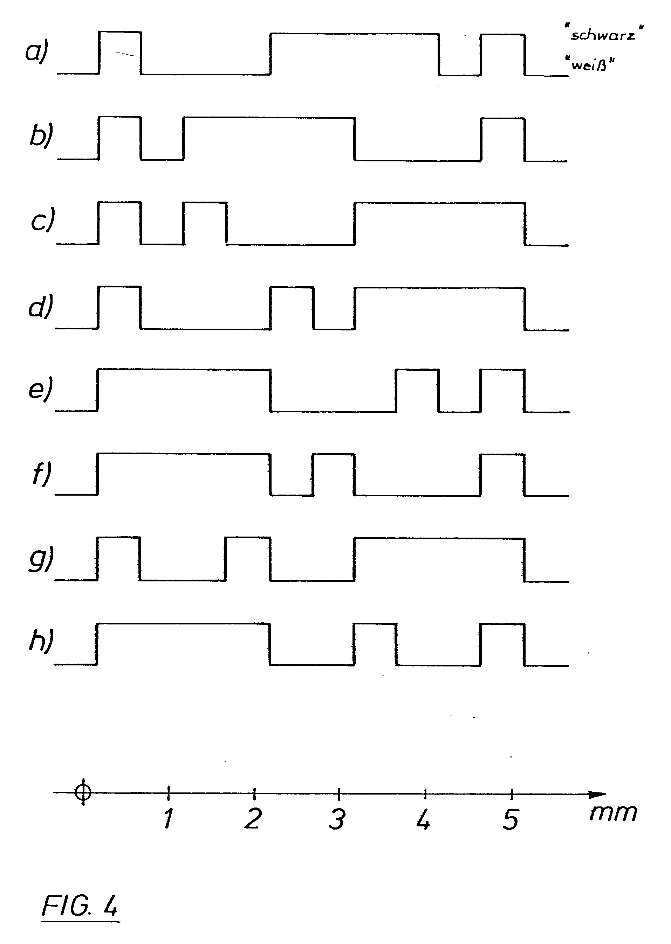

Fig. 4 zeigt die hell-dunkel-Verteilung verschiedener, drei Linien enthaltener PIC-Muster senkrecht zur Linienrichtung, die alle asymmetrisch aufgebaut sind und daher erfindungsgemäss verwendet werden können.

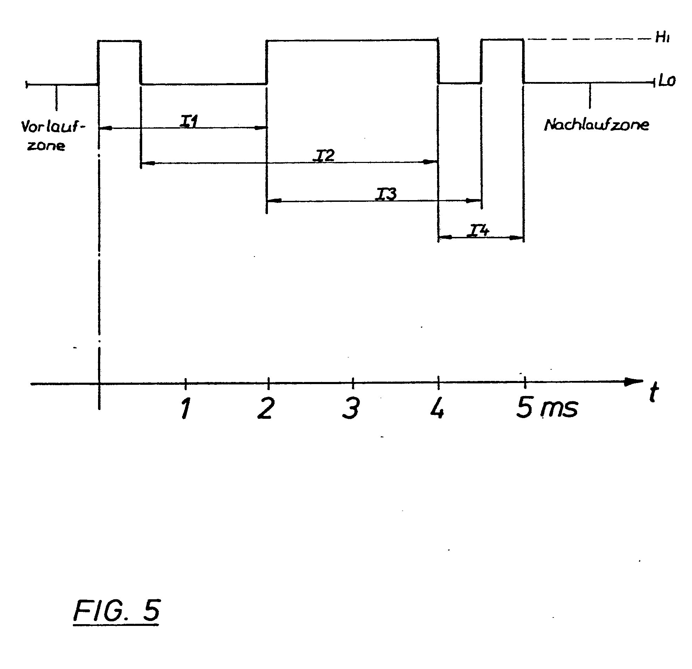

Fig. 5 zeigt einen Abschnitt des Videosignals, der beim Abtasten eines PIC-Musters gemäss Fig. 4a als elektrisches, binäres Signal erhalten wird, wobei dunklen Bereichen des PIC-Musters die Amplitude Hi und hellen Bereichen des PIC-Musters die Amplitude Lo zugeordnet ist. Eventuelle hell-dunkel-Schwankungen innerhalb der einzelnen Linien und Abstände des PIC-Musters werden unmittelbar nach dem Abtasten im elektrischen Signal beseitigt. Innerhalb des Videosignalabschnitts gemäss Fig. 5 sind eine zeichenfreie Vorlaufzone, die der Vorlaufzone 56 in Fig. 1 entspricht, ein erstes Intervall $I1$ von der ersten Anstiegsflanke bis zur zweiten Anstiegsflanke, ein zweites Intervall $I2$ von der ersten Abfallflanke bis zur zweiten Abfallflanke, ein drittes Intervall $I3$ von der zweiten Anstiegsflanke bis zur dritten Anstiegsflanke und ein viertes Intervall $I4$ von der zweiten Abfallflanke bis zur dritten Abfallflanke, sowie eine Nachlaufzone, die der Nachlaufzone 58 gemäss Fig. 1 entspricht, eingetragen.

Die Dekodierung des PIC-Musters, z.B. gemäss Fig. 5, erfolgt nach dem Delta-Distanz-Verfahren, bei dem jeweils überprüft wird, ob aufeinanderfolgende und sich überlappende Intervalle, also $I1$, $I2$ und $I2$, $I3$ und $I3$, $I4$ in einem vorgegebenen Verhältnis zueinander stehen, welches durch das zu dekodierende PIC-Muster gegeben ist. Liegt der Wert des Quotienten aufeinanderfolgender, sich überlappender Intervallängen innerhalb vorgegebener Wertebereiche, wobei die Bereichsbreiten durch die Druckunschärfen und die Digitalisierungsunschärfen gegeben sind, so liegt mit grosser Wahrscheinlichkeit des gesuchte PIC-Muster vor.

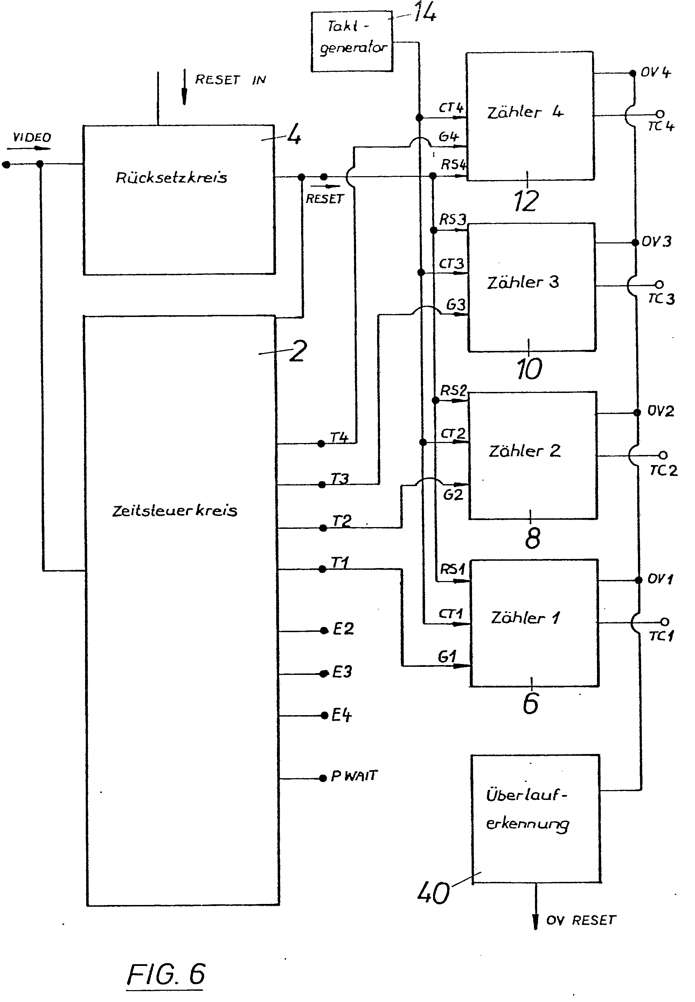

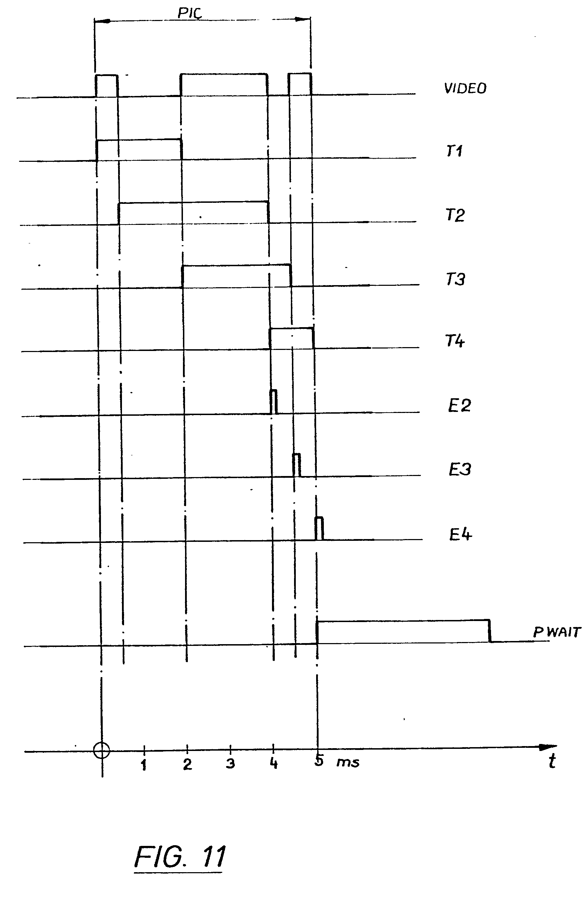

Fig. 6 zeigt die Zählschaltung, die den Eingang der erfindungemässen Dekodiervorrichtung bildet und die Intervallängen der Intervalle I1 bis I4 bestimmt und als Binärwerte zur weiteren Verarbeitung zur Verfügung stellt. Die Zählschaltung enthält einen Zeitsteuerkreis 2, dem das Videosignal VIDEO zugeführt wird, und der an einem ersten Ausgang ein erstes Torsignal von einer ersten Anstiegsflanke bis zu einer zweiten Anstiegsflanke des Videosignals, an einem zweiten Ausgang ein zweites Torsignal T2 von einer der ersten Anstiegsflanke nachfolgenden Abfallflanke bis zu einer zweiten Abfallflanke des Videosignals, an einem dritten Ausgang ein drittes Torsignal T3 von der zweiten Anstiegsflanke bis zu der nächsten, dritten Anstiegsflanke, und an einem vierten Ausgang ein viertes Torsignal T4 von der zweiten Abfallflanke bis zu einer nächsten, dritten Abfallflanke abgibt, vgl. den Impulsplan nach Fig. 11. Die Torsignale T1 bis T4 werden einzeln im Toreingang G1 bis G4 je eines Zählers 6 bis 12 zugeführt. Jeder Zähler 6 bis 12 empfängt an seinem Zähleingang CT1 bis CT4 Taktimpulse von einem Taktgenerator 14, die von den Zählern 6 bis 12 so lange gezählt werden, wie das Torsignal T1 bis T4 anliegt. Der am Ausgang des jeweiligen Zählers 6 bis 12 abgebbare Zählerstand stellt dann ein Mass für die Länge der Torsignale T1 bis T4 dar.

Im Zeitsteuerkreis 2 wird von der Abstiegsflanke des Torsignals T2 ein Auslösesignal E2, von der Abstiegsflanke des Torsignals T3 ein Auslösesignal E3 sowie von der Abstiegsflanke des Torsignals T4 ein Auslösesignal E4 erzeugt und an getrennten Ausgängen abgegeben. Vom Auslösesignal E4 wird ferner ein Signal PWAIT erzeugt, dessen Länge der zeichenfreien Nachlaufzone nach dem Ende des Torsignals T4 entspricht und an einem getrennten Ausgang abgegeben wird.

Die Zählschaltung enthält ferner einen Rücksetzkreis 4, der das Videosignal VIDEO, und an einem getrennten Eingang ein externes Rücksetzsignal RESET IN bei Beginn jeder Abtastzeile empfängt. Der Rücksetzkreis 4 gibt ein Rücksetzsignal RESET an den Rücksetzeingang RS1 bis RS4 der Zähler 6 bis 12 sowie an den Zeitsteuerkreis 2 ab und setzt die Zähler 6 bis 12 sowie den Zeitsteuerkreis 2 in den aktiven Ausgangszustand zurück, wenn das Videosignal einen zeichenfreien Abschnitt – Amplitude Lo – enthält, der grösser ist als die maximale Abtaststrecke zwischen den Linien des PIC-Musters, wobei diese maximale Abtaststrecke durch den maximalen Abstand innerhalb des PIC-Musters, multipliziert mit dem maximal zulässigen Abtastwinkel, gegeben ist.

Die Zählschaltung enthält ferner eine Überlauf-Erkennung 40, die vom Überlauf-Ausgang OV1 bis OV4 der Zähler 6 bis 12 ein Überlauf-Signal erhält und dann ein Rücksetzsignal OV RESET abgibt und dann die Dekodiervorrichtung in einen neuen Bereitzustand zurücksetzt.

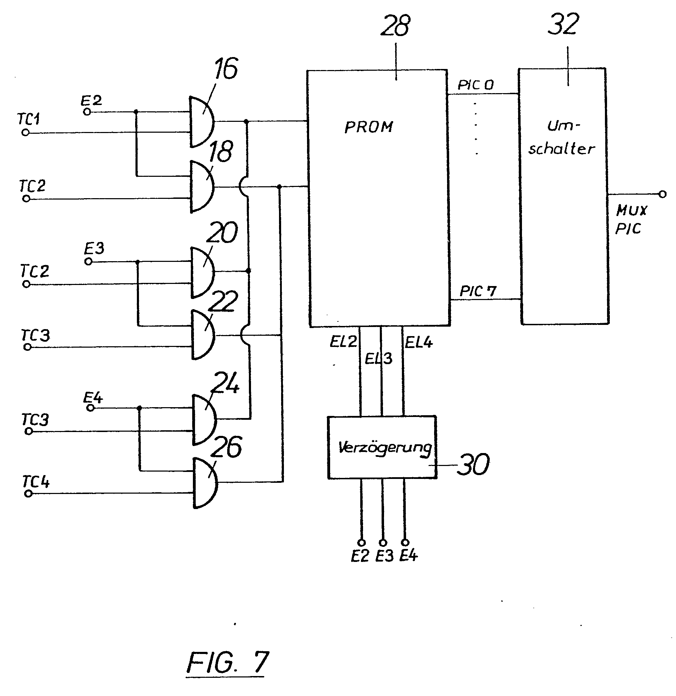

Fig. 7 zeigt eine Ausführungsform der Tabelle der Dekodiervorrichtung. Die Tabelle ist in einen Festwertspeicher PROM 28 gespeichert, der derart organisiert ist, dass der Zählstand TC1 des Zählers 6 einzelne Zeilen einer ersten Speichermatrix adressiert, und dass der Zählstand TC2 des Zählers 8 einzelne Spalten der ersten Speichermatrix adressiert. Die Zählerstände TC1 und TC2 werden über die Torschaltung 16, 18 nach Auszählung des Zählerstandes TC2 durch das Auslösesignal E2 an das PROM 28 gelegt. Innerhalb der ersten Speichermatrix wird ein Erwartungsfeld vorgegeben, welches diejenigen Speicherplätze umfasst, bei denen der Quotient aus Zeilenadresse und Spaltenadresse innerhalb eines vorgegebenen Wertebereichs liegt. Dieser Wertebereich entspricht im Quotienten aus erster Intervallänge zu zweiter Intervallänge des verwendeten PIC-Musters. Wird durch die Zählerstände TC1 und TC2 ein Speicherplatz innerhalb des Erwartungsfeldes adressiert, wird ein Signal LPIC1, LPIC2, LPIC3 mit einer ersten Amplitude, z. B. Hi, abgegeben, welches signalisiert, dass eine Information abgetastet wurde, die einem Teil des verwendeten PIC-Musters entspricht.

Um in entsprechender Weise einen Vergleich der Torimpulse T2 mit T3 durchzuführen, adressiert der Zählerstand TC2 des zweiten Zählers 8 die Zeilen einer zweiten Speichermatrix, und der Zählerstand TC3 des dritten Zählers 10 adressiert die Spalten der zweiten Speichermatrix. Die Adressierung erfolgt, nachdem der Zählerstand TC3 ausgezählt ist und die Zählerstände TC2 und TC3 durch das Auslösesignal E3 durch die Torschaltung 20, 22 an das PROM 28 geliefert werden. Innerhalb der zweiten Matrix ist ebenfalls ein Erwartungsfeld vorgegeben, welches diejenigen Speicherplätze umfasst, deren Quotient aus Zeilenadresse und Spaltenadresse innerhalb eines vorgegebenen Bereichs liegt, der gleich dem Wertebereich des Quotienten der den Torsignalen T2 und T3 entsprechenden Intervalle des PIC-Musters ist. Wird ein Speicherplatz in dem Erwartungsfeld adressiert, wird ein Treffersignal, z.B. mit der Amplitude Hi, abgegeben. Bei Adressierung eines Speicherplatzes ausserhalb des Erwartungsfeldes wird ein Signal z.B. mit der Amplitude Lo abgegeben.

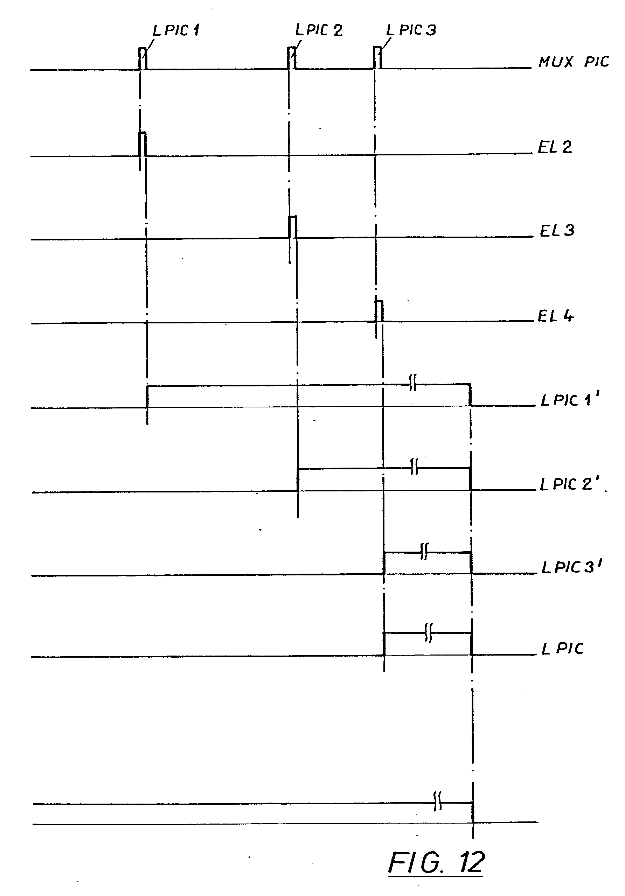

Der Vergleich der Zählerstände TC3 des dritten Zählers 10 mit dem Zählerstand TC4 erfolgt in derselben Weise durch Adressierung von Zeilen und Spalten einer dritten Speichermatrix, die ebenfalls ein Erwartungsfeld enthält, wobei bei Adressierung eines Speicherplatzes innerhalb des Erwartungsfelds ein Treffersignal mit der Amplitude Hi abgegeben wird. Die Adressierung der dirtten Speichermatrix erfolgt, nachdem der Zählerstand TC4 des vierten Zählers 12 gezählt ist und das Auslösesignal E4 die Zählerstände TC3 und TC4 durch die Torschaltung 24 und 26 an das PROM 28 abgibt. Die Torschaltungen 16 bis 26 bestehen aus UND-Toren. Die Auslesung der Treffersignale LPIC1, LPIC2 und LPIC3 erfolgt durch die Auslesesignale EL2, EL3 und EL4, die durch Verzögerung der Auslösesignale E2, E3, und E4 in der Verzögerungsschaltung 30 gewonnen werden, vergl. den Impulsplan nach Fig. 12. Die Auslesung darf erst dann erfolgen, nachdem die Adressierung der ersten, zweiten und dritten Speichermatrix eingeschwungen ist.

Alternativ zu der Ausführungsform gemäss Fig. 7 lassen sich die erste Speichermatrix durch einen ersten Festwertspeicher, PROM 1, die zweite Speichermatrix durch einen zweiten Festwertspeicher, PROM 2, und die dritte Speichermatrix durch einen dritten Festwertspeicher PROM 3 verwirklichen, da dann vorteilhafterweise drei einzelne Festwertspeicher wesentlich kleinerer Speicherkapazität verwendet werden können.

Der Festwertspeicher 28 besitzt Speicherplätze, die jeweils n-Bit-gross sind. Da zur Vorgabe eines Erwartungsfeldes jeweils nur ein Bit der vom Erwartungsfeld erfassten Speicherplätze belegt wird, lassen sich im PROM gleichzeitig bis zu 8 verschiedene Erwartungsfelder für 8 verschiedene PIC-Muster unterbringen, wobei z.B. im PROM 1 das erste Erwartungsfeld im jeweils ersten Bit der Speicherplätze, das zweite Erwartungsfeld im jeweils zweiten Bit der Speicherplätze usw. untergebracht ist. Entsprechendes gilt für PROM 2 und PROM 3. Für jeweils ein bestimmtes PIC-Muster hat dann die Zeilen- und Spaltenadressierung selektiv in die entsprechenden Bits der Speicherplätze zu erfolgen. Ferner ist dem PROM 28 ein Umschalter 32 nachgeschaltet, der selektiv die Auslesung der Treffersignale LPIC1, LPIC2 und LPIC3 aus den betreffenden Bits der Speicherplätze vornimmt und an seinem Ausgang das aus den sequentiellen Treffersignalen LPIC1 und LPIC2 und LPIC3 gebildete Auswertesignal MUX PIC an die Auswerteschaltung abgibt.

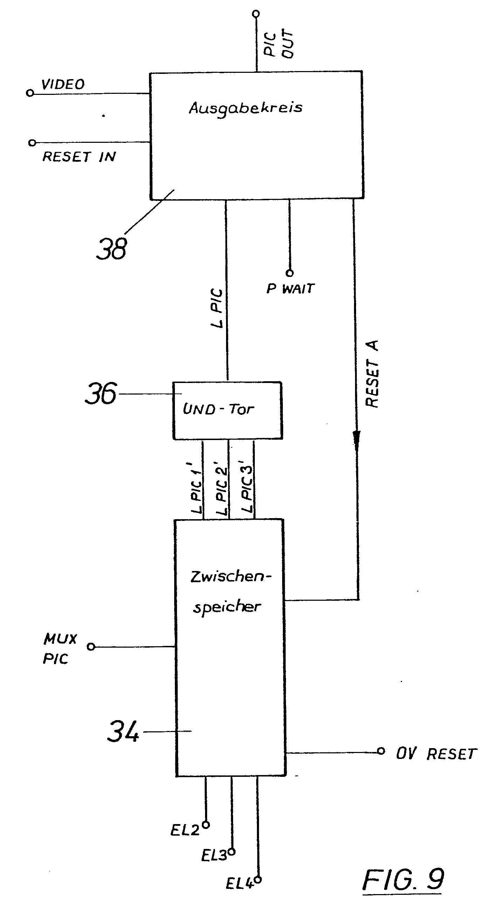

In Fig. 9 ist die Auswerteschaltung der Dekodiervorrichtung dargestellt. Ein Zwischenspeicher 34 empfängt das Auswertesignal MUX PIC und speichert das Treffersignal LPIC1 – das angibt, dass der Wert TC1/TC2 innerhalb eines vorgegebenen Bereichs liegt – sowie das Treffersignal LPIC2 und das Treffersignal LPIC3 ab. Die Einspeicherung erfolgt durch die Eingabe der Auslesesignale EL2, EL3 und EL4, die im wesentlichen gleichzeitig mit den Treffersignalen LPIC1, LPIC2 und LPIC3 auftritt, vergl. den Impulsplan gemäss Fig. 12. Nachdem alle Treffersignale im Zwischenspeicher als Speichersignale LPIC1', LPIC2', LPIC3' abgespeichert sind, werden diese Speichersignale an ein UND-Tor 36 abgegeben, das ein Ausgangssignal LPIC abgibt, wenn alle Speichersignale LPIC1' usw. eine erste Amplitude besitzen, die den Treffersignalen LPIC1 usw. entspricht, vgl. Fig. 12. Das Ausgangssignal LPIC wird einem Ausgabekreis 38 zugeführt, der das Videosignal VIDEO und vom Steuerkreis 2 das Wartesignal PWAIT empfängt. Der Ausgabekreis 38 gibt ein Erkennungssignal PIC OUT ab, wenn das Videosignal VIDEO während des Anliegens des Wartesignals PWAIT auf der Amplitude Lo verharrt, die einen zeichenfreien Untergrund kennzeichnet. Dadurch ist sichergestellt, dass das dekodierte Linienmuster von einer zeichenfreien Nachlaufzone gefolgt wird, die gleich der Nachlaufzone 58 des PIC-Musters ist.

Der Ausgabekreis 38 wird durch das externe Rücksetzsignal RESET IN zurückgesetzt, der daraufhin ein Rücksetzsignal RESETA an den Zwischenspeicher 34 abgibt und diesen ebenfalls für einen erneuten Betrieb zurücksetzt. Der Zwischenspeicher wird ferner durch das Überlauf-Rücksetzsignal OV RESET zurückgesetzt, wenn ein Zähler 6 bis 12 einen Überlauf signalisiert.

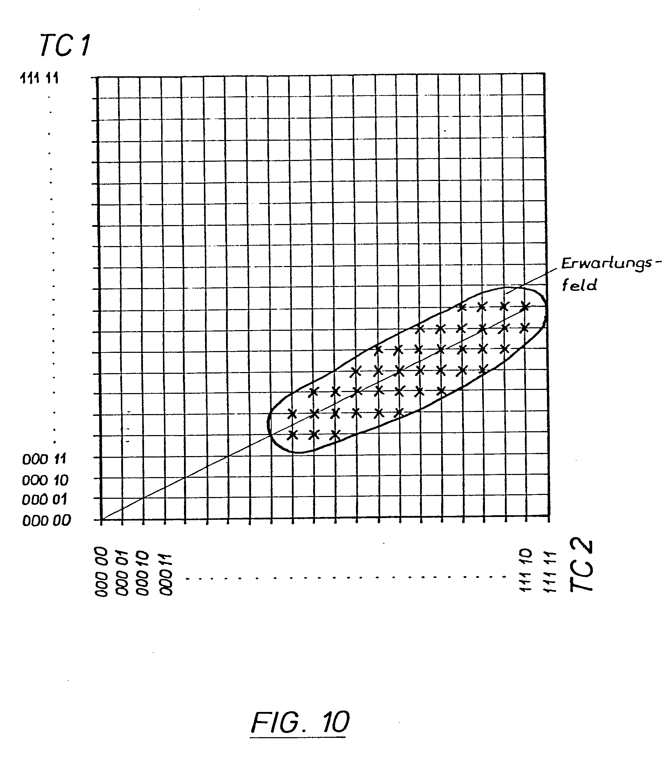

Fig. 10 zeigt in schematischer Darstellung, wie die Teil-Tabelle des PROM 1 zum Vergleich des Quotienten TC1/TC2 organisiert ist. Die Zeilen der Tabelle sind mit binären Adressen fortlaufend bezeichnet. Die Spalten der Tabelle sind ebenfalls mit binären Adressen fortlaufend bezeichnet, wobei gemäss einer bevorzugten Ausführungsform der erfindungsgemässen Dekodiervorrichtung eine 5-Bit-Darstellung der Adressen gewählt ist. Alle Speicherplätze mit einem bestimmten Wert des Quotienten aus Zeilenadresse zu Spaltenadresse liegen auf einer Linie, der sogenannten Erwartungslinie, um die herum das Erwartungsfeld liegt, innerhalb dessen alle Speicherplätze liegen, deren Adressenquotienten innerhalb einem vorgegebenem Wertebereich sind. Die Zählerstände TC1 bis TC4 werden ebenfalls als 5-Bit-Wörter abgegeben. Der Zählerstand TC1 adressiert die Zeilen der Tabelle, der Zählerstand TC2 adressiert die Spalten der Tabelle.

## Patentansprüche

1. Verfahren zum Identifizieren von Gegenständen, die in beliebiger Position und Orientierung und zu beliebigen Zeiten auf einem Bildfenster erscheinen und auf einer dem Bildfenster zugewandten Oberfläche jeweils ein Kennzeichnungsfeld aufweisen, welches in mindestens einer Datenspur (51) Zeichen (52) und mindestens ein Kontrastlinienmuster (54) umfasst, welches die Position und die Orientierung der Datenspur kennzeichnet und mehrere parallele Linien mit unterschiedlichem Abstand und/oder Linienbreiten besitzt, wobei das Bildfenster zeilenweise (60) abgetastet und ein dem abgetasteten Kontrastlinienmuster und den nachfolgenden Zeichen entsprechendes binäres Videosignal erzeugt wird, wobei das Bildfenster im ersten Verfahrensschritt unter verschiedenen Winkeln so lange abgetastet wird, bis ein vorgegebenes Kontrastlinienmuster erkannt wird, im zweiten Verfahrensschritt die Position und Ausrichtung der Datenspur relativ zum Bildfenster bestimmt wird, und im dritten Verfahrensschritt eine Rasterabtastung in Richtung der Datenspur erfolgt und die Zeichen abgelesen und dekodiert werden, dadurch gekennzeichnet,

– dass zur Erkennung des Kontrastlinienmusters (PIC) die Intervallängen sich überlappender mindestens jeweils einen Hell-Dunkel-Bereich umfassenden Intervalle (Fig. 5 I1 bis I4) des Videosignals gemessen und in Form binärer Zählerstände (TC1 bis TC4) dargestellt werden,

— dass die Zählerstände (Fig. 6 TC1 bis TC4) eine in einem Speicher (28 in Fig. 7) gespeicherte zweidimensionale Tabelle (Fig. 10) adressieren, in der ein Erwartungsfeld mit Kriterien für ein vorgegebenes Verhältnis zweier aufeinanderfolgender Intervallängen der Intervalle (I1 bis I4) enthalten ist,

— dass der einer Intervallänge (IN) entsprechende Zählerstand (TCN) eine Zeile der Tabelle adressiert und der der nachfolgenden Intervallänge (IN + 1) entsprechende Zählerstand eine Spalte der Tabelle adressiert,

— dass ein Treffersignal (LPIC1, LPIC2, LPIC3) erzeugt wird, wenn das Verhältnis der beiden jeweils aufeinanderfolgenden Intervallängen in einem vorgegebenen Wertebereich liegt, und

— dass ein Erkennungssignal (Fig. 9 PIC OUT) abgegeben wird, wenn bei einer durch das Kontrastlinienmuster (PIC) vorgegebenen Anzahl von aufeinanderfolgenden Adressierungsschritten jeweils ein Treffersignal (LPIC1, LPIC2, LPIC3) erzeugt wird.

2. Verfahren nach Anspruch 1, dadurch gekennzeichnet, dass in der zweidimensionalen Tabelle das Erwartungsfeld diejenigen Tabellenplätze umfasst, auf denen der Quotient der beiden miteinander verglichenen, aufeinanderfolgend gemessenen Intervallängen innerhalb des vorgegebenen Wertebereichs liegt, und dass ein Treffersignal erzeugt wird, wenn die miteinander verglichenen Intervallängen einem Tabellenplatz innerhalb des Erwartungsfeldes entsprechen.

3. Verfahren nach Anspruch 2, dadurch gekennzeichnet, dass das Erwartungsfeld in einem Bereich der Tabelle liegt, der durch jeweils eine Zeile und eine Spalte mit minimaler und maximaler Intervallänge begrenzt ist.

4. Verfahren nach Anspruch 2 oder 3, dadurch gekennzeichnet, dass jeweils zwei miteinander zu vergleichende, aufeinanderfolgend gemessene Intervallängen in eine eigene Tabelle mit eigenem Erwartungsfeld zugeordnet ist.

5. Verfahren nach Anspruch 4, dadurch gekennzeichnet, dass in die einzelnen Tabellen verschiedene Erwartungsfelder für sich entsprechende aufeinanderfolgend gemessene Intervallängen verschiedener Kontrastlinienmuster vorgesehen sind.

6. Verfahren nach einem der Ansprüche 2 bis 5, dadurch gekennzeichnet, dass die Zählerstände zweier aufeinanderfolgend gemessener Intervallängen gleichzeitig in den Speicher (28) eingegeben werden, nachdem die später gemessene Intervallänge gemessen ist.

7. Verfahren nach Anspruch 1, dadurch gekennzeichnet, dass die Intervalle des Videosignals jeweils von einer Anstiegsflanke bis zur nächsten Anstiegsflanke und überlappend von der zwischen diesen Anstiegsflanken liegenden Abfallflanke bis zur nächsten Abfallflanke gemessen werden.

8. Verfahren nach einem der vorstehenden Ansprüche, dadurch gekennzeichnet, dass das Kontrastlinienmuster eine zeichenfreie Vorlaufzone vorgegebener Länge besitzt, und dass die Messung der Intervallängen erst einsetzt, wenn eine zeichenfreie Vorlaufzone der vorgegebenen Länge im Videosignal festgestellt wird.

9. Verfahren nach einem der vorstehenden Ansprüche, dadurch gekennzeichnet, dass die Messung der Intervallängen beendet wird, wenn eine Intervallänge einen vorgegebenen Maximalwert überschreitet, der gleich der im Kontrastlinienmuster auftretenden maximalen Intervallänge entspricht.

10. Verfahren nach einem der vorstehenden Ansprüche, dadurch gekennzeichnet, dass die laufende Messung der Intervallängen beendet und eine neue Messung gestartet wird, wenn das Verhältnis zweier aufeinanderfolgend gemessener Intervallängen ausserhalb des vorgegebenen Wertebereichs liegt.

11. Verfahren nach einem der vorstehenden Ansprüche, dadurch gekennzeichnet, dass die laufende Messung der Intervallängen beendet und eine neue Messung gestartet wird, wenn eine zeichenfreie Zwischenzone vorgegebener Dauer im Videosignal festgestellt wird, die gleich der maximalen Abtaststrecke zwischen den Linien des Kontrastlinienmusters entspricht.

12. Verfahren nach einem der vorstehenden Ansprüche, dadurch gekennzeichnet, dass das Kontrastlinienmuster eine zeichenfreie Nachlaufzone vorgegebener Länge besitzt, und dass ein Erkennungssignal (PIC OUT) nur abgegeben wird, wenn das Videosignal eine zeichenfreie Nachlaufzone der vorgegebenen Länge enthält.

13. Verfahren nach einem der vorstehenden Ansprüche, dadurch gekennzeichnet, dass die Intervallängen digital als Vielfaches einer vorgegebenen Taktperiode ausgezählt werden.

14. Verfahren nach einem der vorstehenden Ansprüche, dadurch gekennzeichnet, dass dieselbe Zeile des Bildfeldes n-mal abgetastet wird, und dass das Erkennungssignal (PIC OUT) erst abgegeben wird, wenn n-mal hintereinander ein Kontrastlinienmuster erkannt wird.

15. Vorrichtung zum Durchführen des Verfahrens nach einem der Ansprüche 1 bis 14, mit einer opto-elektronischen Abtasteinrichtung mit drehbarem Abtastraster, die am Ausgang das binäre Videosignal abgibt, das dem zeilenweise abgetasteten Bildfenster entspricht und das Kontrastmuster der abgetasteten Zeile binär enthält, mit Dekodiereinrichtungen zum Erkennen des abgetasteten Kontrastlinienmuster (PIC), das die Position und die Orientierung mindestens einer Datenspur des Kennzeichnungsfeldes kennzeichnet und mehrere parallele Linien mit unterschiedlichem Abstand und/oder Linienbreite enthält, und mit Einrichtungen zum Ausrichten des Abtastrasters parallel zur Datenspur und zum Lesen der abgetasteten Zeichen der Datenspur, dadurch gekennzeichnet, dass die Dekodiereinrichtungen (2–40) eine Zählschaltung (2, 6–14) enthalten, die das Videosignal empfängt und die Intervallängen aufeinanderfolgend sich überlappender Intervalle des Videosignals bestimmt, dass die Dekodiereinrichtungen (2–40) mindestens eine Speichermatrix (PROM 28) enthalten, die über eine Torschaltung (16–26) den aufeinanderfolgenden Intervalllängen entsprechende Zählerstände (TC1, TC2; TC2, TC3; TC3, TC4 ...) paarweise empfängt und jeweils das Treffersignal (LPIC1, LPIC2, LPIC3) abgibt, wenn das Verhältnis der beiden aufeinanderfolgenden Intervallängen in einem vorgegebenen Wertebereich liegt, das dem Verhältnis der entsprechenden Intervalle des Kontrastlinienmusters entspricht, und dass eine Auswerteschaltung (34, 36, 38) vorgesehen ist, die bei Aufeinanderfolge einer vorgegebenen Anzahl von Treffersignalen (LPIC1, ...) das Erkennungssignal (PIC OUT) abgibt.

16. Vorrichtung nach Anspruch 15, dadurch gekennzeichnet, dass die Zählschaltung (2, 6–14) einen Zeitsteuerkreis (2) enthält, der Torimpulse (T1, T2, T3, T4 ...) erzeugt, die sich überlappenden Intervallen des Videosignals entsprechen, deren Impulslänge von aufeinanderfolgenden Anstiegsflanken oder aufeinanderfolgenden Abstiegsflanken des Videosignals festgelegt ist, dass die Torimpulse (T1, T2, T3, T4 ...) im Toreingang je eines Zählers (6–12) zuführbar sind, dass die Zähler (6–12) am Zähleingang gemeinsam mit einem Taktgenerator (14) verbunden sind und die Torimpulsintervalle auszählen und als digital ausgezählte Intervallängen der Speichermatrix (28) zuleiten.

17. Vorrichtung nach Anspruch 16, dadurch gekennzeichnet, dass die Zählschaltung (2, 6–14) eine Überlauf-Erkennung (40) enthält, die bei Überlauf eines Zählers (6–12) die Dekodiereinrichtungen (2–40) zurücksetzt.

18. Vorrichtung nach einem der Ansprüche 15 bis 17, dadurch gekennzeichnet, dass die Speichermatrix (28) als zweidimensionaler Festwertspeicher (PROM) ausgebildet ist, dass die verschiedenen möglichen diskreten Zählwerte einer ersten Intervallänge eindeutig zugeordnete Zeilen des Festwertspeichers adressieren, dass die verschiedenen möglichen diskreten Zählwerte der nachfolgend ausgezählten Intervallänge eindeutig zugeordnete Spalten des Festwertspeichers adressieren, und dass ein Erwartungsfeld vorgegeben ist, welches diejenigen Speicherplätze umfasst, bei denen der Quotient aus Zeilenadresse zu Spaltenadresse in einem vorgegebenen Wertebereich liegt, und dass bei Adressierung eines Speicherplatzes innerhalb des Erwartungsfeldes ein Treffersignal (LPIC1, LPIC2, LPIC3) abgegeben wird.

19. Vorrichtung nach Anspruch 18, dadurch gekennzeichnet, dass für jeweils zwei aufeinanderfolgende Intervall-Zählwerte (TC1, TC2; TC2, TC3; TC3, TC4 ...) ein eigener Festwertspeicher (PROM 1, PROM 2, PROM 3 ...) mit eigenem Erwartungsfeld vorgesehen ist.

20. Vorrichtung nach Anspruch 19, dadurch gekennzeichnet, dass zwei aufeinanderfolgend gezählte Intervall-Zählwerte (TC1, TC2; TC2, TC3; TC3, TC4 ...) den zugeordneten Festwertspeicher (PROM 1, PROM 2, PROM 3, ...) gleichzeitig jeweils dann adressieren, wenn der spätere Intervall-Zählwert ausgezählt ist und der Zeitsteuerkreis (2) ein Auslösesignal (E2, E3, E4) zum Aktivieren der vor dem Festwertspeicher liegenden Torschaltung (16, 18; 20, 22; 24, 26; ...) abgibt.

21. Vorrichtung nach einem der Ansprüche 18 bis 20, dadurch gekennzeichnet, dass jeder Speicherplatz der Festwertspeicher n Bit umfasst und jedes Bit einem selektiv adressierbaren Erwartungsfeld für n verschiedene Kontrastlinienmuster zugeordnet ist, und dass die den verschiedenen Erwartungsfeldern zugeordneten Signale (LPIC1, LPIC2, LPIC3) mittels eines nachgeschalteten Umschalters (32) selektiv der Auswerteschaltung (34, 36, 38) zuführbar sind.

22. Vorrichtung nach einem der Ansprüche 15 bis 21, dadurch gekennzeichnet, dass die Auswerteschaltung (34, 36, 38) einen Zwischenspeicher (34) enthält, der die Treffersignale (LPIC1, LPIC2) bis zum Eintreffen des letzten Treffersignals (LPIC3) speichert und dann alle Treffersignale (LPIC1, LPIC2, LPIC3) getrennten Eingängen eines UND-Tors (36) zuführt, das ein Ausgangssignal (LPIC) abgibt, wenn alle Treffersignale (LPIC1, LPIC2, LPIC3) vorliegen.

23. Vorrichtung nach Anspruch 22, dadurch gekennzeichnet, dass dem UND-Tor (36) ein Ausgangskreis (38) nachgeschaltet ist, der das Videosignal und vom Zeitsteuerkreis (2) ein Wartesignal (PWAIT) erhält und das Erkennungssignal (PIC OUT) abgibt, wenn das Videosignal während des Anliegens des Wartesignals (PWAIT) einen zeichenfreien Nachlaufabschnitt besitzt.

24. Vorrichtung nach einem der Ansprüche 15 bis 23, dadurch gekennzeichnet, dass ein Rücksetzkreis (4) vorgesehen ist, der das Videosignal, und bei Beginn jeder Abtastzeile ein externes Rücksetzsignal (RESET IN) empfängt, dass der Rücksetzkreis (4) ein Rücksetzsignal (RESET) abgibt, wenn das Videosignal einen zeichenfreien Abschnitt enthält, der grösser ist als die maximale Abtaststrecke zwischen den Linien des Kontrastlinienmusters, und dass der Rücksetzkreis (4) ein Rücksetzsignal (RESET) abgibt, wenn ein externes Rücksetzsignal (RESET IN) anliegt, und dass das Rücksetzsignal (RESET) den Zählern (6–12) und den Zeitsteuerkreis (2) zum Rücksetzen zuführbar ist.

**Claims**

1. Method of identifying articles, which appear in any position and orientation and at any time at an image aperture and each have a designating area or panel on a surface which is facing the image aperture, which panel comprises symbols (52) in at least one datum track (51) and at least one contrasting line pattern (54), which characterises the position and the orientation of the datum track and has a plurality of parallel lines of different spacing and/or line width, in connection with which the image aperture is scanned line by line (60) and a binary video signal corresponding to the scanned contrast line pattern and the following symbols is produced, the image aperture in the first step of the method being scanned at different angles until a prescribed contrasting line pattern is detected, in the second step of the method, the position and alignment of the data track relatively to the image aperture is established, and in the third step of the method, a grid scanning is effected in the direction of the data track and the symbols are read off and decoded, characterised in that,

- for the detection of the contrast line pattern (PIC), the interval lengths of overlapping intervals (Figs. 11 to 14) of the video signal and in each case comprising at least one light-dark region are measured and portrayed in the form of binary counter readings (TC1 to TC4),
- that the counter readings (TC1 to TC4, Fig. 6) address a two-dimensional table (Fig. 10) which is stored in a store (28 in Fig. 7) and in which is contained an expectation zone with criteria for a prescribed ratio between two successive interval lengths of the intervals (11 to 14),
- that the counter reading (TCN) corresponding to an interval length (IN) addresses one line of the table and the reading corresponding to the following interval length (IN+1) addresses one column of the table,
- that a coincidende signal (LPIC1, LPIC2, LPIC3) is produced when the relation of the two respectively following interval lengths lies in a prescribed value range, and
- that a recognition signal (PIC OUT Fig. 9) is delivered when a coincidence signal (LPIC1, LPIC2, LPIC3) is produced with a number of successive addressing steps which is prescribed by the contrast line pattern (PIC).

2. Method according to claim 1, characterised in that, in the two-dimensional table, the expectation zone comprises those table positions at which is situated the quotient of those two successively measured interval lengths within the prescribed value range which are compared with one another and a coincidence signal is produced when the interval lengths compared with one another correspond to a table position within the expectation zone.

3. Method according to claim 2, characterised in that the expectation zone is situated in a region of the table which in each case is defined by a line and a column with minimal and maximal interval length.

4. Method according to claim 2 or 3, characterised in that always two successively measured interval lengths which are to be compared with one another are associated with their own table having a common expectation field.

5. Method according to claim 4, characterised in that different expectation fields or zones for appropriately successively measured interval lengths of different contrast line patterns are provided in the individual tables.

6. Method according to one of claims 2 to 5, characterised in that the counter readings of two successively measured interval lengths are simultaneously introduced into the store (28), after the subsequently measured interval length is measured.

7. Method according to claim 1, characterised in that the intervals of the video signal are in each case measured from one rising flank to the next rising flank and in overlapping manner from the descending flank lying between these rising flanks to the next descending flank.

8. Method according to one of the preceding claims, characterised in that the contrast line pattern has a symbol-free preliminary zone of prescribed length, and that the measurement of the interval lengths is first initiated when a symbol-free preliminary zone of the prescribed length is identified in the video signal.

9. Method according to one of the preceding claims, characterised in that the measurement of the interval lengths is terminated when an interval length exceeds a pre-set maximum value, which value just corresponds to the maximum interval length appearing in the contrast line pattern.

10. Method according to one of the preceding claims, characterised in that the progressive measurement of the interval lengths is ended and a new measurement is started when the ratio between two successively measured interval lengths is outside the prescribed value range.

11. Method according to one of the preceding claims, characterised in that the progressive measurement of the interval lengths is ended and a new measurement is started when a symbol-free intermediate zone of prescribed duration is detected in the video signal, which zone just corresponds to the maximum scanning path between the lines of the contrast line pattern.

12. Method according to one of the preceding claims, characterised in that the contrast line pattern has a symbol-free follow-up zone of prescribed length, and that an identification signal (PIC OUT) is only delivered when the video signal contains a symbol-free follow-up zone of the prescribed length.

13. Method according to one of the preceding claims, characterised in that the interval lengths are counted out digitally as a multiple of a prescribed timing period.

14. Method according to one of the preceding claims, characterised in that the same line of the image zone is scanned n times, and that the identification signal (PIC OUT) is only delivered when a contrast line pattern is identified n times in succession.

15. Apparatus for carrying into effect the method according to one of the claims 1 to 14, comprising an opto-electronic scanning device with rotatable scanning screen, which delivers, at the output, the binary video signal which corresponds to the image aperture scanned line-by-line and contains in binary form the contrast pattern of the scanned lines, de-coding means for the detection of the scanned contrast line pattern (PIC), which characterises the position and orientation of at least one datum track of the identification field and contains a plurality of parallel lines which are differently spaced and/or have a different line width, and means for the alignment of the scanning grid parallel to the datum track and for reading or sensing the scanned symbols of the datum track, characterised in that the decoding means (2–40) contain a counter circuit (2, 6–14) which receives the video signal and determines the interval lengths of following and overlapping intervals of the video signal, that the decoding means (2–40) contain at least one storage matrix (PROM 28) which, by way of a gate circuit (16–26), receives the counter readings (TC1, TC2; TC2, TC3; TC3, TC4 ...) in pairs, corresponding to the successive interval lengths and in each case delivers the identification signal (LPIC1, LPIC2, LPIC3) when the relationship of the two successive interval lengths is in a prescribed value range which corresponds to the relationship of the corresponding intervals of the contrast line pattern, and that an evaluation circuit (34, 36, 38) is provided which delivers the recognition signal (PIC OUT) in the event of a succession of a specified number of identification signals (LPIC, ...).

16. Apparatus according to claim 15, characterised in that the counter circuit (2, 6–14) contains a time control circuit (2), which generates gate pulses (T1, T2, T3, T4 ...), which correspond to overlapping intervals of the video signal and of which the pulse length is determined by successive rising flanks or successive descending flanks of the video signal, that the gate pulses (T1, T2, T3, T4 ...) are each capable of being fed in the gate input to a counter (6–12), that the counters (6–12) are jointly connected at the counting input to a timing generator (14) and count out the gate impulses at intervals and feed them as digitally selected interval lengths to the storing matrix (28).

17. Apparatus according to claim 16, characterised in that the counting circuit (2, 6–14) contains an over-run detector (40) which, in the event of overrunning of a counter (6–12), sets back the decoding means (2–40).

18. Apparatus according to one of claims 15 to 17, characterised in that the store matrix (28) is designed as a two-dimensional programme register (PROM), that the various possible discrete counting values of a first interval length address well-defined associated lines of the programme register, that the various possible discrete counting values of the subsequently counted interval length address well-defined columns of the programme register, and that an expectation field is prescribed, which covers those store positions at which the quotient from line address to column address lies in a prescribed value range, and with addressing of a store position within the expectation field, an identification signal (LPIC1, LPIC2, LPIC3) is delivered.

19. Apparatus according to claim 18, characterised in that a specific programm register (PROM 1, PROM 2, PROM 3 ...) with its own expectation field is provided in each case for two successive interval counting values (TC1, TC2: TC2, TC3; TC3, TC4 ...).

20. Apparatus according to claim 19, characterised in that two successively counted interval counting values (TC1, TC2; TC2, TC3; TC3, TC4 ...) in each case address the associated programme registers (PROM 1, PROM 2, PROM 3 ...) simultaneously when the later interval counting value is counted out and the time control circuit (2) delivers a release or tripping signal (E2, E3, E4) for activating the gate circuit (16, 18; 20, 22; 24, 26; ...) in front of the programme register.

21. Apparatus according to one of claims 18 to 20, characterised in that each storage space of the programme register stores n bits and each bit is associated with a selectively addressable expectation field for n different contrast line patterns, and that the signals (LPIC 1, LPIC 2, LPIC 3) associated with the different expectation fields are capable of being supplied selectively to the evaluation circuit (34, 36, 38) by means of a following selector switch (32).

22. Apparatus according to one of claims 15 to 21, characterised in that the evaluation circuit (34, 36, 38) contains an intermediate store (34), which stores the signals (LPIC1, LPIC2) until the arrival of the last signal (LPIC3) and then delivers all said signals (LPIC1, LPIC2, LPIC3) to separate inputs of an AND gate (36), which supplies an output signal (LPIC) when all said signals (LPIC1, LPIC2, LPIC3) are present.

23. Apparatus according to claim 22, characterised in that an output circuit (38) is connected following the AND gate, which contains the video signal and, from the time control circuit (2), receives a waiting signal (PWAIT) and delivers the recognition signal (PIC OUT) when the video signal, during the proximity of the waiting signal (PWAIT), has a signal-free run-out section.

24. Apparatus according to one of claims 15 to 23, characterised in that a resetting circuit (4) is provided, which receives the video signal and, with commencement of each scanning line, an external resetting signal (RESET IN), that the resetting circuit (4) delivers a resetting signal (RESET) when the video signal contains a signal-free section which is larger than the maximal scanning path between the lines of the contrast line pattern, and that the resetting circuit (4) delivers a resetting signal (RESET) when an external resetting signal (RESET IN) is present, and that the resetting signal (RESET) can be supplied to the counters (6–12) and the time control circuit (2) for the resetting.

**Revendications**

1. Procédé pour identifier des objets qui apparaissent dans une position et une orientation quelconques et à des moments quelconques sur une fenêtre de projection et qui comportent sur une surface tournée vers cette fenêtre de projection, respectivement un champ d'identification, comportant au moins un indicatif (52) de piste de données (51) et au moins un modèle à lignes contrastées (54), qui caractérise la position et l'orientation de la piste de données et comporte plusieurs lignes parallèles avec des intervalles différents et/ou des largeurs de lignes différentes, procédé dans lequel la fenêtre de projection est balayée ligne par ligne (60), cependant qu'un signal vidéo binaire correspondant au modèle à lignes contrastées et à l'indicatif qui lui fait suite, ainsi balayés, est obtenu, la fenêtre de projection dans une première étape du procédé étant balayée sous différents angles jusqu'à ce qu'un modèle à lignes contrastées prédéterminé soit identifié, tandis que dans une seconde étape du procédé la position et l'orientation de la piste de données par rapport à la fenêtre de projection sont déterminées, et que dans la troisième étape du procédé, s'effectue un balayage de la mire selon la direction de la piste de données cependant que les indicatifs sont lus et décodés, procédé caractérisé en ce que:

- pour identifier le modèle à lignes contrastées (PIC), les longueurs d'intervalles des intervalles (fig. 5, 11 à 14) se chevauchant et comprenant au moins respectivement une zone claire et une zone sombre, du signal vidéo, sont mesurées et mises sous la forme d'états de compteurs binaires (TC1 à TC4), (fig. 6) et emmagasinées dans une mémoire (28, sur la fig. 7),
- les états de compteurs (TC1 à TC4 sur la fig. 6) adressent un tableau à deux dimensions (fig. 10) contenant un champ de probabilité avec des critères pour un rapport prédéterminé de deux longueurs d'intervalles successives des intervalles (11 à 14),
- l'état de compteur (TCN) correspondant à une longueur d'intervalles (IN) adresse une ligne du tableau tandis que l'état de compteur correspondant à la longueur d'intervalles suivante (IN + 1) adresse une colonne du tableau,
- un signal d'approche (LPIC1, LPIC2, LPIC3) est obtenu lorsque le rapport des deux longueurs d'intervalles respectives se suivant se situe dans une plage de valeurs prédéterminée,
- un signal d'identification (PIC OUT sur la fig. 9) est délivré lorsque pour un nombre prédéterminé par le modèle à lignes contrastées (PIC) d'étapes d'adressage successives il est respectivement obtenu un signal d'approche (LPIC1, LPIC2, LPIC3).

2. Procédé selon la revendication 1, caractérisé en ce que dans le tableau à deux dimensions le champ de probabilité comporte les places du tableau dans lesquelles le quotient des deux longueurs d'intervalles successivement mesurées et comparées entre elles, se situe à l'intérieur de la place de valeur prédéterminée, tandis qu'un signal d'approche est obtenu lorsque les deux longueurs d'intervalles comparées entre elles correspondent à une place du tableau à l'intérieur du champ de probabilité.

3. Procédé selon la revendication 2, caractérisé en ce que le champ de probabilité se situe dans une zone du tableau délimitée par respectivement une ligne et une colonne avec une longueur d'intervalle minimale et maximale.

4. Procédé selon l'une quelconque des revendications 2 et 3, caractérisé en ce que respectivement deux longueurs d'intervalles successivement mesurées et à comparer l'une avec l'autre, sont associées dans un tableau qui leur est propre avec un champ de probabilité qui leur est propre.

5. Procédé selon la revendication 4, caractérisé en ce qu'il est prévu dans les différents tableaux des champs de probabilités différents pour les longueurs d'intervalles successivement mesurées se correspondant de différents modèles à lignes contrastées.

6. Procédé selon l'une quelconque des revendications 2 à 5, caractérisé en ce que les états de compteurs de deux longueurs d'intervalles successivement mesurées, sont introduits simultanément dans la mémoire (28) après que la longueur d'intervalle mesurée en dernier lieu ait été mesurée.

7. Procédé selon la revendication 1, caractérisé en ce que les intervalles du signal vidéo sont respectivement mesurés d'un flanc ascendant jusqu'au flanc ascendant immédiatement suivant et en se chevauchant à partir du flanc descendant se situant entre ces flancs ascendants jusqu'au flanc descendant immédiatement suivant.

8. Procédé selon l'une quelconque des revendications 1 à 7, caractérisé en ce que le modèle à lignes contrastées comporte une zone de parcours initial exempte de marques, d'une longueur prédéterminée, et que la mesure des longueurs d'intervalles n'est entreprise que lorsqu'une zone de parcours initial exempte de marques de cette longueur prédéterminée, est constatée dans le signal vidéo.

9. Procédé selon l'une quelconque des revendications 1 à 8, caractérisé en ce que la mesure des longueurs d'intervalles sera terminée lorsqu'une longueur d'intervalle dépasse une valeur maximale prédéterminée qui correspond en même temps à la longueur maximale d'intervalles intervenant dans le modèle à lignes contrastées.

10. Procédé selon l'une quelconque des revendications 1 à 9, caractérisé en ce que la mesure courante des longueurs d'intervalles prendra fin et une nouvelle mesure sera démarrée lorsque le rapport de deux longueurs d'intervalles successivement mesurées se situe en dehors de la plage de valeurs prédéterminée.

11. Procédé selon l'une quelconque des revendications 1 à 10, caractérisé en ce que la mesure courante des longueurs d'intervalles prendra fin et une nouvelle mesure sera démarrée lorsqu'une zone intermédiaire exempte de marques d'une durée prédéterminée sera constatée dans le signal vidéo, cette zone correspondant en même temps à la longueur maximale de balayage entre les lignes du modèle à lignes contrastées.

12. Procédé selon l'une quelconque des revendications 1 à 11, caractérisé en ce que le modèle à lignes contrastées comporte une zone de parcours final exempte de marques, d'une longueur prédéterminée, et qu'un signal d'identification (PIC OUT) n'est délivré que lorsque le signal vidéo contient une zone de parcours final exempte de marques de cette longueur prédéterminée.

13. Procédé selon l'une quelconque des revendications 1 à 12, caractérisé en ce que les longueurs d'intervalles sont décomptées numériquement sous la forme de multiples d'une période de cadencement prédéterminée.

14. Procédé selon l'une quelconque des revendications 1 à 13, caractérisé en ce que la même ligne du champ d'images est balayée n fois et que le signal d'identification (PIC OUT) n'est délivré que lorsqu'un modèle à lignes contrastées est identifié n fois successivement.

15. Dispositif pour mettre en œuvre le procédé selon l'une quelconque des revendications 1 à 14, avec une installation de balayage optique et électronique comportant une mire de balayage rotative et qui délivre à sa sortie le signal vidéo binaire, correspondant à la fenêtre de projection balayée ligne par ligne, et qui contient, sous forme binaire, le modèle contrasté des lignes ainsi balayées, des installations de décodage étant prévues pour la détection du modèle à lignes contrastées (PIC) ainsi balayées, qui caractérise la position et l'orientation d'au moins une piste de données du champ de caractérisation et qui contient plusieurs lignes parallèles avec des intervalles et/ou des largeurs de lignes différents, des installations étant prévues pour orienter la mire de balayage parallèlement à la piste de données et pour lire les indicatifs ainsi balayés de cette liste de données, dispositif caractérisé en ce que les installations de décodage (2 à 40) comportent un circuit de comptage (2, 6 à 14) recevant le signal vidéo et déterminant les longueurs d'intervalles des intervalles se chevauchant successivement du signal vidéo, ces installations de décodage (2 à 40) contenant au moins une matrice de mémoire (PROM 28) qui reçoit par paires, par l'intermédiaire d'un circuit de portes (16 à 26) les états de compteurs (TC1, TC2; TC2, TC3; TC3, TC4 ...) correspondants aux longueurs d'intervalles se succédant, et qui délivre respectivement le signal d'approche (LPIC1, LPIC2, LPIC3) lorsque le rapport des deux longeurs d'intervalles se succédant, se situe dans une plage de valeurs prédéterminée, qui correspond au rapport des intervalles correspondants du modèle à lignes contrastées, tandis qu'il est prévu un circuit d'exploitation (34, 36, 38) qui, lors de la succession d'un nombre prédéterminé de signaux d'approche (LPIC1, ...) délivre le signal d'identification (PIC OUT).

16. Dispositif selon la revendication 15, caractérisé en ce que le circuit de comptage (2, 6 à 14) comporte un circuit de commande temporisé (2) engendrant des impulsions de portes (T1, T2, T3, T4 ...) correspondant aux intervalles se chevauchant du signal vidéo, et dont la longueur d'impulsion est établie par les flancs montants successifs ou bien les flancs descendants successifs du signal vidéo, les impulsions de portes (T1, T2, T3, T4 ...) étant susceptibles d'être amenées à l'entrée de porte de chaque compteur (6 à 12), ces compteurs (6 à 12) étant reliés en commun à leur entrée de comptage avec un générateur d'impulsions (14) et comptant les intervalles d'impulsions de portes, qui sont appliqués sous la forme de longueurs d'intervalles décomptés numériquement à la matrice de mémoire (28).

17. Dispositif selon la revendication 16, caractérisé en ce que le circuit de comptage (2, 6 à 14) comporte une identification de surcharge (40) qui, lors de la surcharge d'un compteur (6 à 12) remet à zéro les installations de décodage (2 à 40).

18. Dispositif selon l'une quelconque des revendications 15 à 17, caractérisé en ce que la matrice de mémoire (28) revêt la forme d'une mémoire à valeur fixe (PROM) à deux dimensions, les différentes valeurs de comptage discrètes possibles d'une première longueur d'intervalle adressant sans ambiguïté des lignes qui leur sont associées de cette mémoire à valeur fixe, les différentes valeurs de comptage discrètes possibles des longueurs d'intervalles décomptés à la suite adressant sans ambiguïté des colonnes qui leur sont associées de cette mémoire à valeur fixe, tandis qu'un champ de probabilité est donné à l'avance, lequel comprend les emplacements de mémoire pour lesquels le quotient de l'adresse de lignes par rapport à l'adresse de colonnes se situe dans une plage de valeurs prédéterminée, cependant que lors de l'adressage d'un emplacement de mémoire à l'intérieur de ce champ de probabilité, un signal d'approche (LPIC1, LPIC2, LPIC3) est délivré.

19. Dispositif selon la revendication 18, caractérisé en ce que pour respectivement deux valeurs de comptage d'intervalles successives (TC1, TC2; TC2, TC3; TC3, TC4 ...) il est prévu une mémoire à valeur fixe propre (PROM 1, PROM 2, PROM 3 ...) avec un champ de probabilité propre.

20. Dispositif selon la revendication 19, caractérisé en ce que deux valeurs de comptage d'intervalles décomptées successivement (TC1, TC2; TC2, TC3; TC3, TC4 ...) adressent alors respectivement en même temps la mémoire à valeur fixe associée (PROM 1, PROM 2, PROM 3, ...) lorsque la dernière valeur de comptage d'intervalles est décomptée, tandis que le circuit de commande temporisé (2) délivre un signal de déclenchement (E2, E3, E4) pour activer le circuit de portes (16, 18; 20, 22; 24, 26; ...) placé en amont de la mémoire à valeur fixe.

21. Dispositif selon l'une des revendications 18 à 20, caractérisé en ce que chaque emplacement de mémoire de la mémoire à valeur fixe comprend n bits et que chaque bit est associé à un champ de probabilité susceptible d'être adressé sélectivement pour n modèles à lignes contrastées différents, tandis que les signaux (LPIC1, LPIC2, LPIC3) associés aux différents champs de probabilités, sont susceptibles d'être amenés sélectivement au circuit d'exploitation (34, 36, 38) au moyen d'un commutateur (32) branché à la suite.

22. Dispositif selon l'une quelconque des revendications 15 à 21, caractérisé en ce que le circuit d'exploitation (34, 36, 38) comporte une mémoire intermédiaire (34) qui emmagasine les signaux d'approche (LPIC1, LPIC2), jusqu'à ce que survienne le dernier signal d'approche (LPIC3) et applique ensuite tous les signaux d'approche (LPIC1, LPIC2, LPIC3) à des entrées distinctes d'une porte ET (36), laquelle délivre un signal de sortie (LPIC) lorsque tous les signaux d'approche (LPIC1, LPIC2, LPIC3) sont présents.

23. Dispositif selon la revendication 22, caractérisé en ce qu'un circuit de sortie (38) est branché à la suite de la porte ET (36), ce circuit recevant le signal vidéo et, du circuit de commande temporisé (2), un signal d'attente (PWAIT) et délivrant le signal d'identification (PIC OUT) lorsque le signal vidéo pendant l'application du signal d'attente (PWAIT) comporte une zone de parcours final exempte de marques.

24. Dispositif selon l'une quelconque des revendications 15 à 23, caractérisé en ce qu'il est prévu un circuit de remise à zéro (4) qui reçoit le signal vidéo et au début de chaque ligne de balayage, un signal externe de remise à zéro (RESET IN), ce circuit de remise à zéro (4) délivrant un signal de remise à zéro (RESET) lorsque le signal vidéo comporte une partie exempte de marques qui est plus importante que la longueur de balayage maximale entre les lignes du modèle à lignes contrastées, cependant que le circuit de remise à zéro (4) délivre un signal de remise à zéro (RESET) lorsqu'est appliqué un signal de remise à zéro externe (RESET IN), et le signal de remise à zéro (RESET) est susceptible d'être appliqué aux compteurs (6 à 12) et au circuit de commande temporisé (2) pour leur remise à zéro.

_FIG. 1_

703

51

α

50

52

54

56   58

60

60

_FIG. 2_

52   50

1300

54

_FIG. 3_

52   56   58

...680

54

50

FIG. 4

**FIG. 5**

0 017 950

FIG. 6

FIG. 7

TC1 | TC2     PROM 1     TC1/TC2

TC2 | TC3     PROM 2     TC2/TC3

TC3 | TC4     PROM 3     TC3/TC4

28

EL2     EL3     EL4

PIC 0 ...
... PIC 7

0 017 950

FIG. 8

FIG. 9

FIG. 10

*FIG. 11*

FIG. 12